# EUROPÄISCHE PATENTANMELDUNG

(11) **EP 3 385 220 A1**
(43) Veröffentlichungstag der Anmeldung: **10.10.2018**
(21) Anmeldenummer: 17400016.6
(22) Anmeldetag: 05.04.2017
(51) Int. Cl.: C01B 3/38

(54) **VERFAHREN UND ANLAGE ZUR MINIMIERUNG DER EMISSIONEN AN STICKOXIDEN UND AMMONIAK BEI DER KATALYTISCHEN DAMPFREFORMIERUNG**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Adamczyk, Rafal, 33-200 Dabrowa Tarnowska (PL); Lehmann, Maik, 60385 Frankfurt am Main (DE); Thole, Sigrid, 61191 Rosbach vor der Höhe (DE)
(74) Vertreter: Dropsch, Holger

(57) **Zusammenfassung**

Verfahren und Anlage zur Ausführung des Verfahrens zur Minimierung der Emission von Stickoxiden und Ammoniaks bei der katalytischen Dampfreformierung von Kohlenwasserstoffen zu Synthesegas durch Einleitung des diese Emissionen enthaltenden, aus dem Prozesskondensat ausgetriebenen Abgases teils ins Brenngas, teils in die Strahlungszone des SMR-Reaktors und Zersetzung der Emissionen durch selektive nicht-katalytische Reduktion.

## Beschreibung

### Gebiet der Erfindung

Die Erfindung betrifft ein Verfahren zur Minimierung der Emission von Stickoxiden und Ammoniak bei der katalytischen Dampfreformierung von Kohlenwasserstoffen zu Synthesegas, umfassend folgende Verfahrensschritte:
- Bereitstellen eines Einsatzgasgemischs, umfassend Kohlenwasserstoffe und Dampf und eines Brenngases, umfassend Kohlenwasserstoffe und Sauerstoff,
- Umwandeln des Einsatzgasgemischs in Rohsynthesegas durch katalytische Dampfreformierung unter Dampfreformierungsbedingungen in einem Dampfreformierungsreaktor, welcher einen Ofenraum umfasst, der von Brennern beheizt wird (Strahlungszone), die mit dem Brenngas, unter Bildung von Rauchgas, betrieben werden,
- Abkühlen und Trocknen des Rohsynthesegases, wobei und indem ein Teil der darin enthaltenen Feuchte, unter Bildung eines ammoniakhaltigen Prozesskondensats, daraus abgetrennt wird,
- Entgasen des Prozesskondensats in einer Entgasungsvorrichtung unter Bildung eines ammoniakhaltigen Kondensatabgasstroms,
- Aufteilen des ammoniakhaltigen Kondensatabgasstroms in zwei Teilströme und Zugabe des einen Teilstroms zum Brennergas und des anderen Teilstroms zum Rauchgas in der Strahlungszone,
- Messen der Konzentration der Stickoxide und des Ammoniaks im Rauchgas.

Die Erfindung betrifft weiterhin eine Anlage zur Durchführung des Verfahrens.

### Stand der Technik

Verfahren zur Erzeugung von Wasserstoff und Kohlenmonoxid enthaltendem Synthesegas mittels katalytischer Dampfreformierung eines kohlenwasserstoffhaltigen Einsatzgases sind bekannt und beispielsweise in Ullmann's Encyclopedia of Industrial Chemistry, Sixth Edition, Vol. 15, Gas Production, Chapter 2. beschrieben. Die Einsatzgase, ein kohlenwasserstoffhaltiges Gas, wie z. B. Erdgas, und Wasserdampf, im Folgenden Prozessdampf genannt, werden dabei bei erhöhtem Druck, z. B. 20 bis 35 bar, und hoher Temperatur, z. B. 800 bis 950 °C, durch von außen beheizte, mit Katalysator gefüllte Reaktorrohre geleitet. Dabei werden die Einsatzgase in wasserstoff- und kohlenmonoxidreiches Synthesegas umgewandelt. Ein derartiger Reaktor wird häufig als SMR und das Verfahren als SMR-Verfahren bezeichnet, abgekürzt für Steam-Methane-Reformer. Für die Wirtschaftlichkeit des Verfahrens ist es sehr wichtig, die Wärme des aus dem SMR austretenden Synthese- und des Rauchgases möglichst effektiv zur Vorwärmung der Einsatzgase und zur Dampferzeugung zu nutzen. Bei der dabei erfolgenden Abkühlung des Synthesegases wird ein Teil der in ihm enthaltenen Feuchte auskondensiert. Das dabei entstehende, im Folgenden als Prozesskondensat bezeichnete Kondensat wird nach Entfernung gasförmiger Verunreinigungen zur Erzeugung von Prozessdampf wiederverwendet.

Die Entgasung erfolgt rein physikalisch, häufig durch bloße Erwärmung des Kesselspeisewassers in einer Entgasungsvorrichtung, unter Bildung eines Kondensatabgasstroms. Dieser Strom enthält ein Gemisch flüchtiger Stoffe, wie kurzkettige Kohlenwasserstoffe, z. B. Methanol, organische Säuren und Ammoniak. Der Kondensatabgasstrom wird häufig noch direkt in die Atmosphäre entsorgt, aber wegen der Schädlichkeit dieser Stoffe für Umwelt und Gesundheit wird seit einiger Zeit über alternative Entsorgungsmethoden nachgedacht.

In der Offenlegungsschrift DE 10 2007 059 542 A1 wird ein Verfahren vorgestellt, bei dem der Kondensatabgasstrom in den heißen Rauchgasstrom des Dampfreformers eingespeist wird. Die Einspeisung soll dabei so in das Rauchgassystems erfolgen, dass der Abgasstrom auf eine Temperatur zwischen 600 und 1050 °C erwärmt wird. Mit dem im Rauchgas vorhandenen freien Sauerstoff werden stickstoffhaltige Schadstoffe zu Stickstoffoxiden oxidiert, die nachfolgend mit noch vorhandenem Ammoniak weiterreagieren zu freiem Stickstoff und Wasserdampf können. Diese Reaktion ist als selektive nicht-katalytische Reduktion (Selective Non-Catalytic Reduction, SNCR) bekannt, die nach folgender Gleichung abläuft:

2 NO + 2 NH₃ + 0,5 O₂ ↔ 2 N₂ + 3 H₂O

In der Anmeldeschrift US 2012/0051993 A1 wird eine Vielzahl weiterer Möglichkeiten zur Zerstörung der im Kondensatabgasstrom enthaltenen schädlichen Stoffe vorgeschlagen. Es werden mehrere Einspeisestellen für den Abgasstrom in das Brennerabgassystem, und auch in den Ofenraum des SMR selbst, vorgeschlagen. Am Einspeiseort soll dabei eine Temperatur 1000 und 1060 °C herrschen und es wird darauf hingewiesen, dass eine ausreichende Verweilzeit der schädlichen Abgase in dieser Temperaturzone erforderlich ist, um die Stoffe zu zerstören.

Als weitere Möglichkeit wird genannt, einen Teil des Kondensatabgasstroms dem Brenngas beizumischen.

Nachteilig an diesem Verfahren nach dem Stand der Technik ist es, dass der Erfolg des Verfahrens, also die möglichst weitgehende Zerstörung der Schadstoffe, hauptsächlich von der Wahl der Einspeisestelle des Kondensatabgasstroms abhängt. Die optimale Einspeisestelle bzw. Kombination aus Einspeisestellen, muss dabei durch Versuche, nach dem Prinzip "Versuch und Irrtum", ermittelt werden. Dieses Vorgehen ist sehr zeit- und damit kostenaufwendig.

Die Erfindung hat es sich daher zur Aufgabe gemacht, ein entsprechendes Verfahren zur Verfügung zu stellen, dass mit weniger Aufwand in einer SMR-Anlage installiert werden kann und dabei zu gleichwertigen oder verbesserten Ergebnissen insbesondere hinsichtlich des Abbaus stickstoffhaltiger Begleitkomponenten wie Ammoniak führt.

### Beschreibung der Erfindung

Die Aufgabe wird durch ein Verfahren gemäß den Merkmalen des Anspruchs 1 und eine Anlage mit den Merkmalen des Anspruchs 4 gelöst.

### Erfindungsgemäßes Verfahren:

Verfahren zur Minimierung der Emission von Stickoxiden und Ammoniak bei der katalytischen Dampfreformierung von Kohlenwasserstoffen zu Synthesegas, umfassend folgende Verfahrensschritte:
a) Bereitstellen eines Einsatzgasgemischs, umfassend Kohlenwasserstoffe und Dampf und eines Brenngases, umfassend Kohlenwasserstoffe und Sauerstoff,
b) Umwandeln des Einsatzgasgemischs in Rohsynthesegas durch katalytische Dampfreformierung unter Dampfreformierungsbedingungen in einem Dampfreformierungsreaktor, welcher einen Ofenraum (Strahlungszone) umfasst, der von Brennern beheizt wird, welche mit dem Brenngas, unter Bildung von Rauchgas, betrieben werden,
c) Abkühlen und Trocknen des Rohsynthesegases, wobei und indem ein Teil der darin enthaltenen Feuchte, unter Bildung eines ammoniakhaltigen Prozesskondensats, daraus abgetrennt wird,
d) Entgasen des Prozesskondensats in einer Entgasungsvorrichtung unter Bildung eines ammoniakhaltigen Kondensatabgasstroms,
e) Aufteilen des ammoniakhaltigen Kondensatabgasstroms in zwei Teilströme und Zugabe des einen Teilstroms zum Brenngas und des anderen Teilstroms zum Rauchgas in der Strahlungszone,
f) Messen der Konzentration der Stickoxide und des Ammoniaks im Rauchgas,
   wobei
g) das Aufteilen und die Zugabe in Schritt e) so erfolgen, dass die Konzentration der Stickoxide und/oder des Ammoniaks im Rauchgas minimiert wird.

### Erfindungsgemäße Anlage:

Anlage zur Minimierung der Emission von Stickoxiden und Ammoniak bei der katalytischen Dampfreformierung von Kohlenwasserstoffen zu Synthesegas, umfassend einen Dampfreformierungsreaktor, SMR, mit einem mit Brenngas betriebenen Brennern ausgestatteten Ofenraum (Strahlungszone), in dem mit Katalysator gefüllte Reaktorrohre installiert sind, weiter umfassend ein Rauchgassystem zur Ableitung des von den Brennern erzeugten Rauchgases aus dem Ofenraum in die Atmosphäre, weiter umfassend Wärmeaustauscher zur Kühlung des aus dem SMR austretenden Synthesegases und Kondensatabscheider zur Abscheidung des bei der Kühlung des Synthesegases anfallenden Prozesskondensats, weiter umfassend eine Entgasungsvorrichtung in der das Prozesskondensat durch Erwärmung oder Strippen unter Bildung eines Kondensatabgasstroms entgast wird, weiterhin umfassend Vorrichtungen mit Rohrleitungen zur Einspeisung von Kondensatabgas in die Strahlungszone und in das Brenngas, dadurch gekennzeichnet, dass die Anlage weiterhin ein Regelungssystem umfasst, umfassend je ein Regelventil in den Rohrleitungen der Vorrichtungen zur Einspeisung von Kondensatabgas, eine im Rauchgassystem installierte Messvorrichtung zum Messen des Stickoxid- und des Ammoniakgehaltes im Rauchgas und einen automatischen Regler, der in der Lage ist, die Daten der Messvorrichtung zu empfangen, auszuwerten und, durch entsprechende Betätigung der Regelventile, den Stickoxid- und den Ammoniakgehalt in Richtung des jeweils möglichen Minimalgehalts, zu regeln.

Unter Dampfreformierungsbedingungen sind die dem Fachmann an sich bekannten Verfahrensbedingungen, insbesondere von Temperatur, Druck und Verweilzeit, zu verstehen, wie sie oben beispielhaft genannt und detailliert im einschlägigen Schrifttum erörtert werden und bei denen mindestens ein Teilumsatz, bevorzugt allerdings technisch relevante Umsätze der Edukte in Synthesegasprodukte wie CO und Wasserstoff erfolgt. Entsprechend wird unter einem für die Dampfreformierung aktiven Katalysator ein Katalysator verstanden, der unter Dampfreformierungsbedingungen eben solche Umsätze bewirkt.

Die Erfindung macht sich die Tatsache zu Nutze, dass ein effektiver Weg, Ammoniak zu zerstören, darin liegt, es mit Stickoxid gemäß der oben erörterten selektiven nichtkatalytischen Reduktion reagieren zu lassen.

Um ausreichend NOₓ für diese Reaktion im Rauchgassystem zur Verfügung zu stellen, wird ein Teil des Kondensatabgasstroms in das Brennergas eingespeist, um den darin enthaltenen Ammoniak in Stickoxid, entsprechend der nachstehenden Gleichung, umzusetzen:

2 NH₃ + x O₂ ↔ 2 NOₓ + 3 H₂O

Erfindungsgemäß wird der Kondensatabgasstrom so auf das Brennergas und auf die Einspeisung in das Brennabgas aufgeteilt, dass der Stickoxid- und der Ammoniakgehalt in dem an die Umgebung abgegebenen Brennerabgas ein Minimum einnehmen.

### Bevorzugte Ausgestaltungen der Erfindung

Eine bevorzugte Ausgestaltung der Erfindung ist dadurch gekennzeichnet, dass der für die Einleitung ins Rauchgas in der Strahlungszone vorgesehene Teilstrom des Kondensatabgases auf mehrere weitere Ströme aufgeteilt wird, die an unterschiedlichen Orten in die Strahlungszone eingeleitet werden. Auf diese Weise kann die Durchmischung des Kondensatabgases mit dem stickoxidhaltigen Rauchgas und damit die Zerstörung der Stickoxide und des Ammoniaks durch selektive nicht-katalytische Reduktion optimiert werden.

Eine weitere bevorzugte Ausgestaltung der Erfindung ist dadurch gekennzeichnet, dass die Regelung des Stickoxid- und des Ammoniakgehaltes im Rauchgas durch ein automatisches Regelungssystem erfolgt. Dadurch kann die Aufteilung der Kondensatabgasströme schnell an Änderungen und Schwankungen des Dampfreformierungsprozesses angepasst werden.

### Ausführungsbeispiel

Weitere Merkmale, Vorteile und Anwendungsmöglichkeiten der Erfindung ergeben sich auch aus der nachfolgenden Beschreibung eines Ausführungs- und Zahlenbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

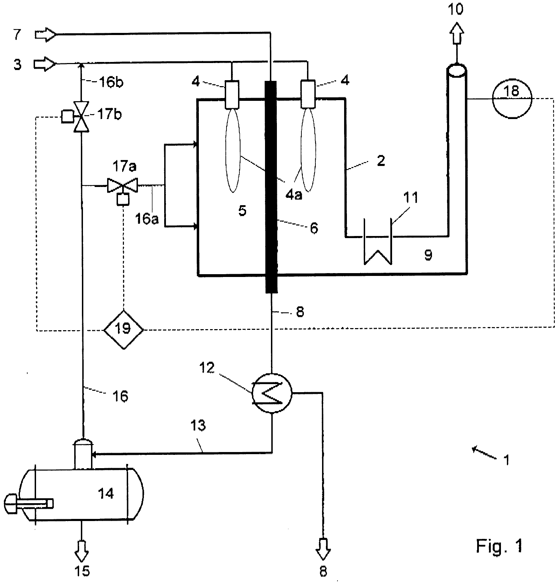

Das erfindungsgemäße Verfahren soll im Folgenden anhand der Zeichnung erläutert werden. Dabei zeigt die einzige Figur
- Fig. 1: ein Anlagenfließbild einer beispielhaften Ausführung des erfindungsgemäßen Verfahrens bzw. der erfindungsgemäßen Anlage.

Die in Fig. 1 gezeigte Anlage 1 zur katalytischen Dampfreformierung umfasst einen Dampfreformierungsreaktor 2, SMR, mit einem mit Brenngas 3 betriebenen Brennern 4 ausgestatteten Ofenraum 5 (Strahlungszone) in dem eine Vielzahl von mit Katalysator gefüllte Reaktorrohren 6 installiert sind. Beispielhaft ist in Fig. 1 nur ein einziges Reaktorrohr 6 dargestellt. In den Reaktorrohren 6 wird vorgewärmtes, aus kohlenwasserstoffhaltigem Gas und Prozessdampf bestehendes Einsatzgasgemisch 7 in Synthesegas 8 umgewandelt. Weiter umfasst der Dampfreformierungsreaktor 2 ein Rauchgassystem 9 zur Ableitung des von den Brennern 4 erzeugten Rauchgases 10 aus dem Ofenraum 5 in die Atmosphäre. Im Rauchgassystem 9 ist ein Wärmeaustauscher 11 installiert, um die Wärme des Rauchgases zur Dampferzeugung zu nutzen. Ferner umfasst die Anlage 1 ein aus mehreren Wärmeaustauschern bestehendes System 12 zur Kühlung des aus dem SMR austretenden Synthesegases 8 durch Wärmeaustausch mit dem kohlenwasserstoffhaltigen Teil des Einsatzgases und zur Dampferzeugung. Das im System 12 gekühlte Synthesegas 8 wird zur weiteren Behandlung aus der Anlage 1 ausgeleitet. Das in dem System 12 aus dem Synthesegas 8 anfallende, ammoniakhaltige Kondensat 13 wird in das Entgasungssystem 14 eingeleitet. Das entgaste Kondensat 15 wird zur Erzeugung von Prozessdampf verwendet. Der bei der Entgasung erzeugte, ammoniakhaltige Kondensatabgasstrom 16 wird in die Ströme 16a und 16b aufgeteilt.

Der Teilstrom 16a wird in diesem Beispiel noch einmal in zwei Ströme aufgeteilt und an zwei Stellen des Ofenraums 5 eingespeist, an der eine Temperatur zwischen 1000 und 1060 °C herrscht. Teilstrom 16b wird in das Brenngas 3 eingespeist. Um einen möglichst niedrigen Gehalt an Stickoxid und Ammoniak im an die Atmosphäre abgegebenen Abgas 10 zu erreichen, ist die Anlage 1 mit einem Regelungssystem ausgestattet, das je ein Regelventil 17a,b in den Rohrleitungen der Teilströme 16a,b des Kondensatabgases 16, eine im Rauchgassystem 9 installierte Messvorrichtung 18 zum, Messen des Stickoxid- und des Ammoniakgehaltes im Rauchgas 10 und ein Computersystem 19, das in der Lage ist, die Daten der Messvorrichtung 18 zu empfangen, auszuwerten und, durch entsprechende Betätigung der Regelventile 17a,b den Stickoxid- und den Ammoniakgehalt im Rauchgas 10 in Richtung des jeweils möglichen Minimalgehalts zu regeln.

### Gewerbliche Anwendbarkeit

Die Erfindung ermöglicht es, die Emission von Stickoxid und Ammoniak des Dampfreformierungsprozesses mit geringem Kostenaufwand zu minimieren. Die Erfindung ist daher vorteilhaft gewerblich anwendbar.

### Bezugszeichenliste

- 1: erfindungsgemäße Anlage
- 2: Dampfreformierungsreaktor, SMR
- 3: Brenngas
- 4: Brenner, mit Flammen 4a
- 5: Ofenraum
- 6: Reaktorrohre
- 7: Einsatzgasgemisch
- 8: Synthesegas
- 9: Rauchgassystem
- 10: Rauchgas
- 11: Wärmeaustauscher
- 12: System aus Wärmeaustauschern
- 13: Prozesskondensat
- 14: Entgasungssystem
- 15: Entgastes Prozesskondensat
- 16: Kondensatabgasstrom, Teilströme 16a und 16b
- 17: a, b Regelventile
- 18: Messvorrichtung zur Messung des Stickoxid- und Ammoniakgehaltes
- 19: Computersystem

## Patentansprüche

1. Verfahren zur Minimierung der Emission von Stickoxiden und Ammoniak bei der katalytischen Dampfreformierung von Kohlenwasserstoffen zu Synthesegas, umfassend folgende Verfahrensschritte:
a) Bereitstellen eines Einsatzgasgemischs, umfassend Kohlenwasserstoffe und Dampf und eines Brenngases, umfassend Kohlenwasserstoffe und Sauerstoff,
b) Umwandeln des Einsatzgasgemischs in Rohsynthesegas durch katalytische Dampfreformierung unter Dampfreformierungsbedingungen in einem Dampfreformierungsreaktor, welcher einen Ofenraum (Strahlungszone) umfasst, der von Brennern beheizt wird, welche mit dem Brenngas, unter Bildung von Rauchgas, betrieben werden,
c) Abkühlen und Trocknen des Rohsynthesegases, wobei und indem ein Teil der darin enthaltenen Feuchte, unter Bildung eines ammoniakhaltigen Prozesskondensats, daraus abgetrennt wird,
d) Entgasen des Prozesskondensats in einer Entgasungsvorrichtung unter Bildung eines ammoniakhaltigen Kondensatabgasstroms,
e) Aufteilen des ammoniakhaltigen Kondensatabgasstroms in zwei Teilströme und Zugabe des einen Teilstroms zum Brenngas und des anderen Teilstroms zum Rauchgas in der Strahlungszone,
f) Messen der Konzentration der Stickoxide und des Ammoniaks im Rauchgas, **dadurch gekennzeichnet, dass**
g) das Aufteilen und die Zugabe in Schritt e) so erfolgen, dass die Konzentration der Stickoxide und/oder des Ammoniaks im Rauchgas minimiert wird.

2. Verfahren gemäß Anspruch 1, **dadurch gekennzeichnet, dass** der für die Einleitung ins Rauchgas in der Strahlungszone vorgesehene Teilstrom auf mehrere weitere Ströme aufgeteilt wird, die an unterschiedlichen Orten in die Strahlungszone eingeleitet werden.

3. Verfahren gemäß Anspruch 1 oder 2, **dadurch gekennzeichnet, dass** die Regelung des Stickoxid- und des Ammoniakgehaltes im Rauchgas durch ein automatisches Regelungssystem erfolgt.

4. Anlage zur Durchführung des Verfahrens gemäß Anspruch 3, umfassend einen Dampfreformierungsreaktor, SMR, mit einem mit Brenngas betriebenen Brennern ausgestatteten Ofenraum (Strahlungszone), in dem mit Katalysator gefüllte Reaktorrohre installiert sind, weiter umfassend ein Rauchgassystem zur Ableitung des von den Brennern erzeugten Rauchgases aus dem Ofenraum in die Atmosphäre, weiter umfassend Wärmeaustauscher zur Kühlung des aus dem SMR austretenden Synthesegases und Kondensatabscheider zur Abscheidung des bei der Kühlung des Synthesegases anfallenden, ammoniakhaltigen Prozesskondensats, weiter umfassend eine Entgasungsvorrichtung in der das Prozesskondensat durch Erwärmung oder Strippen unter Bildung eines ammoniakhaltigen Kondensatabgasstroms entgast wird, weiterhin umfassend Vorrichtungen mit Rohrleitungen zur Einspeisung von Kondensatabgas in die Strahlungszone und in das Brenngas, **dadurch gekennzeichnet, dass** die Anlage weiterhin ein Regelungssystem umfasst, umfassend je ein Regelventil in den Rohrleitungen der Vorrichtungen zur Einspeisung von Kondensatabgas, eine im Rauchgassystem installierte Messvorrichtung zum Messen des Stickoxid- und des Ammoniakgehaltes im Rauchgas und einen automatischen Regler, der in der Lage ist, die Daten der Messvorrichtung zu empfangen, auszuwerten und, durch entsprechende Betätigung der Regelventile, den Stickoxid- und den Ammoniakgehalt in Richtung des jeweils möglichen Minimalgehalts zu regeln.
